# EUROPÄISCHE PATENTSCHRIFT

(11) **EP 2 872 857 B1**
(45) Veröffentlichungstag und Bekanntmachung des Hinweises auf die Patenterteilung: **23.10.2019**
(21) Anmeldenummer: 13727888.3
(22) Anmeldetag: 07.06.2013
(51) Int. Cl.: G01F 1/66

(54) **ULTRASCHALL-DURCHFLUSSMESSGERÄT**
ULTRASOUND FLOW RATE METER
DÉBITMÈTRE À ULTRASONS

(30) Priorität: 16.07.2012 DE 102012013916
(43) Veröffentlichungstag der Anmeldung: 20.05.2015
(73) Patentinhaber: Endress+Hauser Flowtec AG, 4153 Reinach (BL) (CH)
(72) Erfinder: WIEST, Achim, 79576 Weil am Rhein (DE); GRUNWALD, Sascha, 79585 Steinen (DE); BRUMBERG, Oliver, 79618 Rheinfelden (DE); FRÖHLICH, Thomas, 4142 Münchenstein (CH); BERBERIG, Oliver, 79639 Grenzach-Wyhlen (DE); KISSLING, Beat, 4153 Reinach (CH); MÜLLER, Quirin, 4112 Bättwil (CH)
(74) Vertreter: Andres, Angelika Maria
(86) Internationale Anmeldenummer: PCT/EP2013/061813
(87) Internationale Veröffentlichungsnummer: WO 2014/012707

(56) Entgegenhaltungen:
- EP-A1- 0 715 155
- WO-A1-02/44662
- DE-C1- 19 808 642
- DE-U1- 29 803 912

## Beschreibung

Die vorliegende Erfindung betrifft jeweils ein Ultraschall-Durchflussmessgerät, nach dem Oberbegriff des Anspruchs 1.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli - 1. August 2006 in Portland, Oregon, USA, vergleicht gängige Methoden zur Gewichtung der Laufzeiten entlang unterschiedlicher Signalpfade zur Berechnung des Durchflusses.

Die DE 198 61 073 A1 und die DE 297 19 730 U1 offenbaren jeweils eine Durchflussmesseinrichtung mit einem ersten Schallpfad, welcher mehrmals im Messrohr reflektiert wird.

Die US 7,845,240 und die EP 2 282 178 A1 offenbaren jeweils ein Durchflussmessgerät, welches ausgehend von einem Sender einen ersten Signalpfad aussendet, welcher über eine Zweifachbrechung ein Signal an einen Empfänger überträgt. Anschließend sendet der Empfänger, welcher nunmehr die Funktion eines Senders hat, ein Ultraschallsignal auf einem zweiten Signalpfad mittels einer Zweifachreflexion oder Mehrfachreflexion an den ursprünglichen Sender, welcher nunmehr die Funktion des Empfängers hat, zurück. Diese Messanordnung weist eine Signalauswertung auf, welche die Werte des ersten und des zweiten Signalpfades berücksichtigt. Nachteilig daran ist, dass sich während des Durchlaufens des ersten und des zweiten Signalpfades die Eigenschaften der Strömung bereits geändert haben, so dass beispielsweise eine Rotation des Mediums im Messrohr nicht berücksichtigt wird, da sie nur in einer Richtung erfasst wird, jedoch nicht in der Gegenrichtung.

Die EP 0715 155 A1 weist eine Ultraschall-Durchflussmessanordnung auf, in welcher Ultraschallsignale entlang eines Signalpfads mehrfach reflektiert werden, wobei der Signalpfad einen ersten Teilabschnitt und einen zweiten Teilabschnitt aufweist, wobei der erste Teilabschnitt in einer ersten Richtung und der zweite Teilabschnitt in einer zweiten, der ersten Richtung entgegengesetzten Richtung um die Strömungsachse herum ausgebildet ist. Diese Vorrichtung ermöglicht eine Berücksichtigung einer Rotation eines Mediums im Messrohr, sofern die Rotation sich mindestens über den gesamten Signalweg erstreckt. Rotationen, welche auf kleineren Skalen stattfinden, sind durch diese Vorrichtung nicht korrigiert.

Die WO 02/44662 A1 offenbart ein Durchflussmessgerät bei welchem ein Signal auf einem Signalpfad durch Mehrfachreflexion durch ein Messrohr geleitet wird. Dabei bilden die Teilpfade des Signalpfades eine einzige Ebene aus, die parallel zur Messrohrachse verläuft. Auch hier kann beispielsweise kein Rotationsausgleich erfolgen. Hierbei verlaufen zwar Teilabschnitte eines Signalpfades auf einer gemeinsamen Ebene zueinander, jedoch folgen diese Teilabschnitte nicht unmittelbar aufeinander.

Die DE 298 03 912 U1 weist in Fig. 2 einen Signalpfad mit zwei unmittelbar aufeinanderfolgenden und damit korrespondierenden Teilabschnitten 10 und 11, welche auf der gleichen Ebene liegen, auf. Weitere direkt miteinander korrespondierende Teilabschnitte die auf einer gemeinsamen Ebene liegen sind in dieser Druckschrift nicht offenbart, da die beiden Teilabschnitte 5 und 14 nicht miteinander korrespondieren.

Die WO 2010/002432 A1 weist eine Anordnung aus Transducern, jedoch keine Reflexionsflächen auf.

Die WO1995012110A1 zeigt ein Ultraschall-Durchflussmessgerät mit einem Messrohr mit ebenen Wandungen und einer geraden Messrohrachse und zumindest einer Reflexionsfläche im Messrohr mit einer Flächennormalen auf dieser Reflexionsfläche, welche drei von Null verschiedene Komponenten in einem rechtwinkligen Koordinatensystem aufweist, dessen eine Achse der Messrohrachse entspricht. Das Dokument lehrt, dass ein Ultraschallsignal mit einer vorgegebenen Breite, welche deutlich größer ist als ein punktförmiges Signal, eine über diese Breite gaußförmig verteilte Sensitivität aufweist, zur Durchflussmessung verwendet wird. Die Breite des Signals entspricht dabei näherungsweise der Breite des Vierkantmessrohrs. Würde ein solches Signal nun parallel zu den Seitenwänden durch das Messrohr verlaufen, würde der Bereich mit der höchsten Sensitivität durch den mittleren Bereich des Messrohrs verlaufen, und folglich auch die höheren Strömungsgeschwindigkeiten mit höheren Wertigkeiten registrieren, was bei sehr kleinen Strömungsgeschwindigkeiten zu einem Messfehler führt. Das Dokument lehrt daher weiter, das Messrohr weitgehend homogen zu durchschallen, indem die Ultraschallsignale durch alle Bereiche des Messrohrs mittels orientierter Reflexionen geführt werden. Zur Veranschaulichung wurde das breite Ultraschallsignal durch einzelne Teilstrahlen dargestellt. Die Weglängen der einzelnen Teilstrahlen sind gleich lang, so dass sich die Teilstrahlen nicht durch Interferenz auslöschen.

Die Aufgabe der Erfindung besteht darin, ein Ultraschall-Durchflussmessgerät vorzuschlagen, welches den Durchfluss auch bei vorgelagerten Störungen, insbesondere anlagen- oder prozessbedingter Natur, zuverlässig erfasst und dabei kostengünstig herzustellen ist.

Die Aufgabe wird durch den Gegenstand des unabhängigen Anspruchs 1 gelöst.

Erfindungsgemäß weist ein Ultraschall-Durchflussmessgerät, welches ein Messrohr mit einer geraden Messrohrachse, einen Sender zum Senden eines akustischen Signals auf einen ersten Signalpfad, einen Empfänger zum Empfangen des akustischen Signals auf dem ersten Signalpfad und mehrere Reflexionsflächen umfasst, an welchen das akustische Signal auf dem ersten Signalpfad jeweils zumindest einmal reflektiert wird, wobei sich dieser erste Signalpfad aus geraden Teilabschnitten zusammensetzt, wobei
a) jeweils die minimalen Abstände von mindestens drei Teilabschnitten einen Abstand von 0,4-0,6 r zur Messrohrachse aufweisen, wobei r der Innenradius des Messrohres ist;
b) wobei ein erster Teilabschnitt, welcher eine erste achsparallele Ebene definiert, einen unmittelbar darauffolgenden zweiten Teilabschnitt aufweist, welcher eine zweite achsparallele Ebene definiert, beide Ebenen durch einen Reflexionsfläche verlaufen und die Normalvektoren einen Winkel von weniger als 10° einschließen,
c) wobei ein dritter Teilabschnitt, welcher eine dritte achsparallele Ebene definiert, einen unmittelbar darauffolgenden vierten Teilabschnitt aufweist, welcher eine vierte achsparallele Ebene definiert,
   wobei beide Ebenen durch eine zweite Reflexionsfläche verlaufen und die Normalvektoren einen Winkel von weniger als 10° einschließen; und
d) wobei der Verlauf des Signalpfades in axialer Draufsicht ein Vieleck beschreibt, dessen Seitenschnittpunkte innerhalb, auf oder außerhalb des Messrohres liegen.

Dabei setzt sich der Signalpfad in Schritt b) und c) in axialer Richtung fort. Durch den in Merkmal b) und c) definierten Strahlenverlauf wird eine Kompensation einer Rotationsbewegung der Strömung sowohl in negativer als auch in positiver Richtung kompensiert. Durch den Verlauf des Signalpfades in Form eines Vielecks wird ein geschlossener Signalpfadsverlauf geschaffen und somit eine symmetrische Erfassung von Strömungseffekten ermöglicht.

Bevorzugte Weiterbildungen und Ausgestaltungen der Erfindung sind Gegenstand der Unteransprüche.

Es ist von Vorteil, wenn eine dritte und eine vierte Reflexionsfläche auf oder im Messrohr parallel zur Messrohrachse hintereinander angeordnet sind
und
eine fünfte Reflexionsfläche und
entweder
   i. der Sender oder
   ii. der Empfänger oder
   iii. eine sechste Reflexionsfläche
auf oder im Messrohr parallel zur Messrohrachse hintereinander angeordnet sind, wobei sich der Signalpfad aus sechs oder weniger geraden Teilpfaden zusammensetzt. Die sechste Reflexionsfläche kann die Position des Senders oder des Empfängers einnehmen. Durch diese kompakte symmetrische Anordnung kann eine sichere Anordnung der Reflexionsflächen am oder im Messrohr des Durchflussmessgerätes ohne zusätzliche Berechnung von Versatzwinkeln erfolgen.

Es ist von Vorteil, wenn der Sender, der Empfänger und die Reflexionsflächen derart zueinander im oder am Messrohr angeordnet oder ausgerichtet sind, dass der Verlauf des Signalpfad in axialer Draufsicht im Wesentlichen ein Dreieck beschreibt, dessen Schenkelschnittpunkte innerhalb, auf oder außerhalb der Messrohrwandung liegen und
dass der erste und der zweite Teilabschnitt des Signalpfades entlang eines ersten Schenkels des Dreiecks verlaufen, wobei der erste und der zweite Teilabschnitt des Signalpfades aufeinanderfolgende Teilabschnitte sind,
und
dass der dritte und der vierte Teilabschnitt des Signalpfades entlang eines zweiten Schenkels des Dreiecks verlaufen, wobei der dritte und der vierte Teilabschnitt des Signalpfades aufeinanderfolgende Teilabschnitte sind. Die Winkelvorgaben eines Dreiecks führen bei den Bohrungen im Messrohr oder bei deren Anordnung am Messrohr lediglich zu geringen Fehlerabweichungen. Zudem können die Bohrungen aufgrund des symmetrischen Charakters beispielsweise anhand von Schablonen vorgenommen werden. Insgesamt führt dieses Vorgehen zu höheren Fertigungsgenauigkeiten und höheren Fertigungsgeschwindigkeiten.

Optimalerweise wird durch Reflexion des ersten Teilabschnittes an einer ersten der Reflexionsflächen der zweite Teilabschnitt gebildet wird und durch Reflexion des dritten Teilabschnittes an einer zweiten der Reflexionsfächen der vierte Teilabschnitt gebildet. Das heißt die erste und zweite Ebene liegen, abgesehen von sehr geringen Fertigungsabweichungen von weniger als 0,1° aufeinander.

Messungen haben gezeigt, dass eine zunehmend bessere Kompensation von Rotationsbewegungen erfolgt, wenn der Winkel zwischen den achsparallelen Ebenen, gemäß den Merkmalen b) und c) gering ist. Daher ist es von Vorteil wenn beide Ebenen durch eine zweite Reflexionsfläche verlaufen und die Normalvektoren einen Winkel von weniger als 5°, vorzugsweise weniger als 2°, besonders bevorzugt weniger als 0,2°, einschließen.

Für eine optimale symmetrische Erfassung die abschnittshalbierenden Punkte von mindestens drei Teilabschnitten einen Abstand von 0,45-0,55 r, vorzugsweise 0,48-0,52 r, zur Messrohrachse aufweisen, wobei r der Innenradius des Messrohres.

In besonders kompakter Bauweise ist der Signalpfad des Vieleckes durch insgesamt sechs Teilabschnitte des Signalpfades aufgebaut. Dadurch ist eine Miniaturisierung der bislang bekannten Geräte möglich.

Vorteilhaft weist das Messrohr einen ersten Teilbereich mit vermindertem Innendurchmesser zur Strömungskompensation auf.

Dadurch erfolgt sowohl eine Strömungsprofilabflachung als auch eine Bestimmung der Fließgeschwindigkeit und/oder des Volumendurchflusses bei Strömungen erfolgen, welche aufgrund von vorgelagerten Störungen eine ungleichmäßige Massenverteilung aufweisen.

Es ist von Vorteil, wenn der Signalpfad innerhalb des ersten Teilbereiches des Messrohres verläuft. Da an diesem Punkt bereits eine Strömungsprofilabflachung erfolgt ist und somit eine bessere Bestimmung der Fließgeschwindigkeit oder des Volumendurchflusses erfolgen kann.

Es ist von Vorteil, wenn der Anstellwinkel zwischen einem zweiten Teilbereich des Messrohres mit größerem Innendurchmesser und dem ersten Teilbereich mit verminderten Innendurchmesser weniger als 15°, vorzugsweise weniger als 10°, insbesondere 6-8'° beträgt. Unterhalb von 6° macht sich keine signifikante Strömungsprofilabflachung bemerkbar. Über 15° treten zunehmend Strömungsstörungen auf. Strömungsstörungen wird bei einem überwiegenden Teil von Flüssigkeiten bei einem Übergang mit einem Anstellwinkel von weniger als 10° vermieden, wobei der Anstellwinkel allgemein als abfallender Winkel gegenüber der zunächst parallel verlaufenden Innenrohrwandung am Einlass des Messrohres zu verstehen ist.

In einer bevorzugten Ausführungsvariante weist das Messrohr einen vorderen Teilbereich zur Gleichrichtung der Strömung auf. Dieser vordere Teilbereich weist vorzugsweise den gleichen Rohrdurchmesser wie das anzuschließende Rohr auf. Im hinteren Teilbereich kann die Messung erfolgen. Dadurch wird bei besonders stark gestörten Strömungen eine Gleichrichtung vor der eigentlichen Messung ermöglicht, ohne zusätzliche Bauteile außerhalb des Messrohres bereitzustellen.

Bevorzugte Ausführungsbeispiele der Erfindung werden anhand der nachfolgenden Zeichnungen näher erläutert. Sie zeigen:
- Fig. 1: axiale Draufsicht auf ein erfindungsgemäßes Ultraschall-Durchflussmessgerät;
- Fig. 2: geschnittene Perspektivansicht des Ultraschall-Durchflussmessgerätes;
- Fig.3: Perspektivansicht mit geschnittenem Teilbereich des erfindungsgemäßen Ultraschall-Durchflussmessgerätes;
- Fig.4: Seitenansicht des Grundkörpers des Ultraschall-Durchflussmessers;
- Fig.5: Seitenansicht eines zweiten Ultraschall-Durchflussmessers mit geschnittenem Teilbereich;
- Fig.6: Diagramm der Strömungsabweichung über Volumendurchfluss bei an sich bekannten Zwei-Pfad Ultraschall-Durchflussmessern
- Fig.7: Diagramm der Strömungsabweichung über Volumendurchfluss bei einem erfindungsgemäßen Ultraschall-Durchflussmesser.

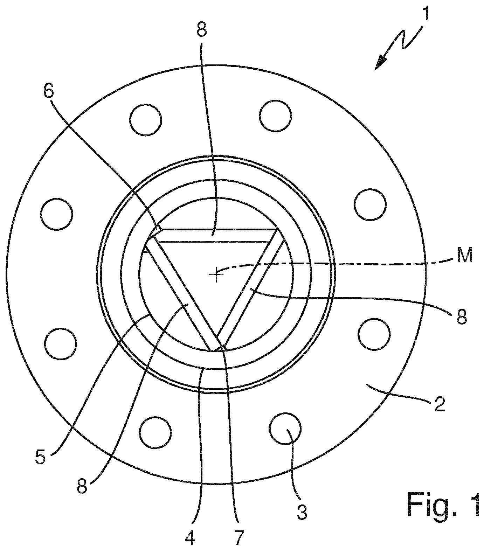

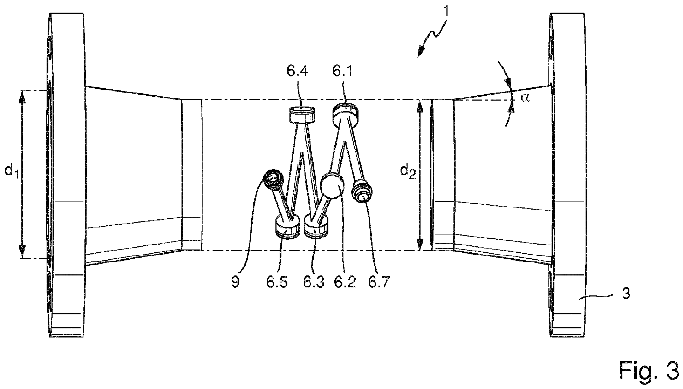

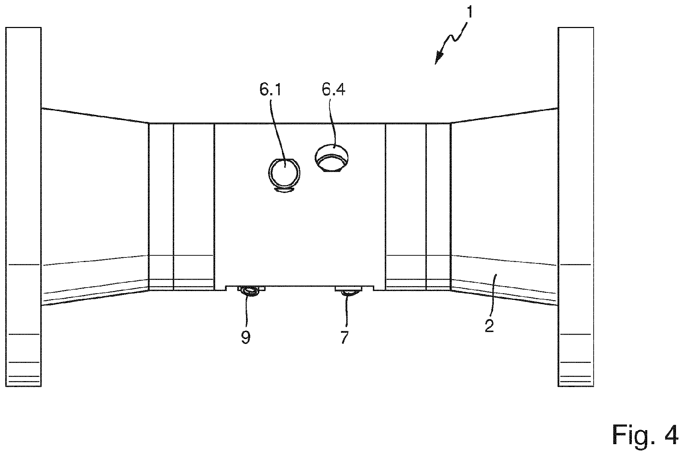

Fig. 1-4 zeigen einen Aufbau eines Ultraschall-Durchflussmessgerätes 1 und einen optimalen Signalpfadsverlauf mit einem Signalpfad 8, welcher sich im vorliegenden Fall aus sechs geraden Teilabschnitten 8.1 bis 8.6 zusammensetzt. Das Ultraschall-Durchflussmessgerät weist ein Messrohr 2 auf, welches über Flansche 3 endständig an jeweils ein Rohrsegment einer Rohrleitung angeschlossen werden kann.

Das Messrohr weist im Bereich der Flansche 3 einen zweiten Teilbereich 4 mit einem Messrohrinnendurchmesser d₁ auf, welcher sich zur Mitte des Messrohres hin zu einem ersten Teilbereich 5 mit einem Innendurchmesser d₂ verkleinert.

Entlang dieses ersten Teilbereichs 5 sind im konkreten Ausführungsbeispiel der Fig. 1-3 zwei Ultraschallwandler 7 und 9, sowie fünf Reflektoren 6.1 bis 6.5 im Messrohr 2 angeordnet.

Alternativ können auch anstelle des Empfängers ein weiterer sechster Reflektor angeordnet sein, welcher ein Rückführen des Signals entlang des zweiten Signalpfades ermöglicht.

Alternativ dazu können aber auch die Ultraschallwandler und/oder die Reflektoren lediglich am Messrohr angeordnet sein.

Bei den Reflektoren 6.1 bis 6.5 sind insbesondere Reflektoren mit konkaven Oberflächen von Vorteil, da diese eine Verwehung des Ultraschallsignals bei größeren Durchflussgeschwindigkeiten entgegenwirken.

Durch den Übergang 10 vom zweiten Teilbereich 4 mit größerem Durchmesser d₁ in den ersten Teilbereich 5 mit kleinerem Durchmesser d₂ wird eine Strömungsprofilabflachung erreicht. Der Anstellwinkel a des Übergangs 10, gegenüber einer geraden Rohrwand beträgt vorzugsweise weniger als 15°, vorzugsweise weniger als 10°, insbesondere 6-8°. Dies ist beispielsweise von Vorteil, wenn das zu messende Medium zuvor eine Störung, beispielsweise eine Krümmung passiert hat. In diesem Fall wirkt aufgrund der Trägheit des Mediums eine größere Masse des Mediums auf einen Wandbereich des Messrohres 2 stärker ein als auf den diesem Wandbereich gegenüberliegenden Teil. Für einen Ausgleich wird üblicherweise ein Strömungsgleichrichter verwendet. Durch das erfindungsgemäße Messgerät erfolgt allerdings bereits eine Strömungsprofilabflachung, ohne dass ein vorgeschalteter Strömungsgleichrichter notwendig wäre. Dies führt zu einem breiteren Einsatzspektrum und zu einem geringeren Platzbedarf bei Verwendung Ultraschall-Durchflussmessgeräten in Rohrleitungen. Entsprechende Störungen können neben Krümmungen auch Ablagerungen oder andere Objekte in der Rohrleitung, z.B. an Entnahmestellen sein, welche auf gleiche Art und Weise ohne zusätzliche Bauteile ausgeglichen werden können. Die grundsätzliche Charakteristik der Strömung bleibt dabei erhalten

Zusätzlich zu dem Auftreten von ungleichmäßiger Masseverteilung des Mediums Störungen treten auch häufig Verwirbelungen und Rotationsbewegungen auf.

Diese werden durch eine Doppelreflexion von zumindest zwei geraden Teilabschnitten 8.1 und 8.4 des Signalpfades kompensiert. Der konkrete Signalverlauf des Ausführungsbeispiels der Fig. 1-3 wird im Folgenden näher beschrieben.

Ausgehend vom Ultraschallwandler 7, dem Sender, wird ein Ultraschallsignal in das Messrohr ausgesandt. Der Signalverlauf durch das Messrohr zwischen dem Ultraschallwandler 7, sofern dieser als Sender fungiert, und dem Ultraschallwandler 9, sofern dieser als Empfänger fungiert, kennzeichnet einen ersten Signalpfad.

Ein zweiter Signalpfad beschreibt den Signalverlauf vom Ultraschallwandler 9, als Sender, zum Ultraschallwandler 7, als Empfänger und wird im Folgenden nicht näher betrachtet.

Dieses Ultraschallsignal legt einen ersten Teilabschnitt 8.1 auf dem ersten Signalpfad 8 zurück, wird an der Reflexionsfläche 6.1 reflektiert und legt einen zweiten Teilabschnitt 8.2 auf dem ersten Signalpfad 8 zurück.

Der erste Teilabschnitt weist dabei einen Abstand von 0,4-0,6 r zur Messrohrachse auf, wobei r der Innenradius des Messrohres ist. Im Fall des in Fig. 1 dargestellten optimalen Falles, in welchem der Verlauf des Signalpfades ein gleichseitiges Dreieck beschreibt, welches seine Eckpunkte auf den Reflexionsflächen hat, beträgt der Abstand zur Messrohrachse 0,5 r.

Der Abstand kann allerdings auch größer oder kleiner sein, so dass das Dreieck bzw. dessen Eckpunkte innerhalb oder außerhalb des Messrohres liegen.

Der erste und der zweite Teilabschnitt 8.1 und 8.2 liegen idealerweise auf ein und derselben achsparallelen Ebene, wie dies ebenfalls in Fig. 1 dargestellt ist.

In einem weniger idealen Fall spannt der erste Teilabschnitt 8.1 eine erste achsparallele Ebene auf. Der zum ersten Teilabschnitt unmittelbar korrespondierende zweite Teilabschnitt, spannt eine zweite achsparallele Ebene auf.
Dabei setzt sich der Signalpfad in axialer Richtung fort. Beide Ebenen verlaufen durch die erste Reflexionsfläche 6.1. Ausgehend von der Reflexionsfläche öffnen sich die Ebenen unter einem nur geringen Winkel von weniger als 10°, so dass die Ebenen bis auf diese geringe Abweichung nahezu parallel zueinander verlaufen.

Der erfindungsgemäße Strahlenverlauf der Teilabschnitte 8.1 und 8.2 beschreibt somit eine Rückreflexion des Teilabschnittes 8.1 in einer nahezu gleichen Ebene wodurch eine rotierende Strömung in einer ersten Rotationsrichtung messtechnisch erfasst und/oder kompensiert werden kann.

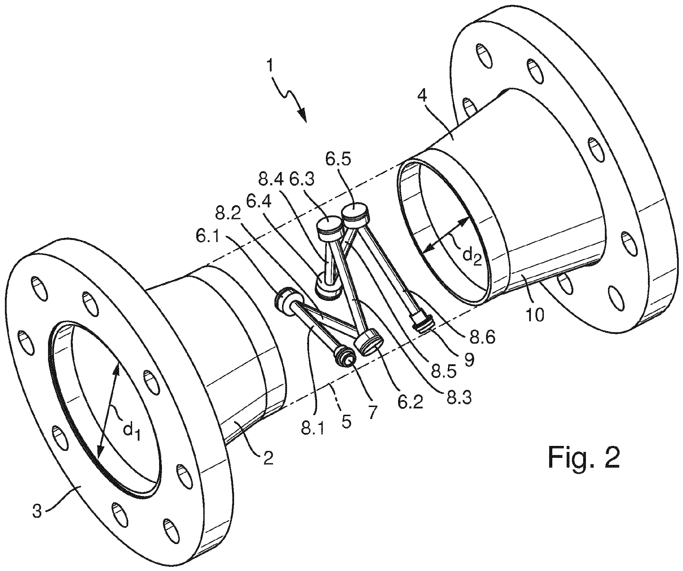

Ein dritter Teilabschnitt 8.4 wird in Fig. 2 auf dem ersten Signalpfad 8 zwischen den Reflektoren 6.3 und 6.4 zurückgelegt. Dieser wird an der Reflexionsfläche 6.4 reflektiert und legt einen vierten Teilabschnitt 8.4 auf dem ersten Signalpfad 8 bis zum Reflektor 6.5 zurück.

Der dritte Teilabschnitt weist ebenfalls einen Abstand von 0,4-0,6 r zur Messrohrachse auf, wobei r der Innenradius des Messrohres ist und der Abstand im vorliegenden Fall 0,5 r beträgt.

Der Abstand kann allerdings auch größer oder kleiner sein, so dass das Dreieck bzw. dessen Eckpunkte innerhalb oder außerhalb des Messrohres liegen.

Auch im Vorliegenden Fall erfolgt eine Rückreflexion, wie sie bereits beim ersten Teilabschnitt 8.1 beschrieben wurde.

Der erfindungsgemäße Strahlenverlauf der Teilabschnitte 8.4 und 8.5 beschreibt somit eine Rückreflexion des Teilabschnittes 8.4 in einer nahezu gleichen Ebene wodurch eine rotierende Strömung in einer zweiten Rotationsrichtung messtechnisch erfasst und/oder kompensiert werden kann.

Diese zweite Rotationsrichtung ist vorzugsweise der ersten Rotationsrichtung entgegengesetzt, so dass eine vollständige Kompensation der Rotationsanteile der Strömung erfolgen kann.

Für eine symmetrische Erfassung der Position der Strömung und zur Erfassen von symmetrischen Verwirbelungen ist es schließlich notwendig, dass Verlauf des Signalpfades in axialer Draufsicht ein Vieleck beschreibt, dessen Seitenschnittpunkte innerhalb, auf oder außerhalb des Messrohres liegen.

Dieses Vieleck ist optimalerweise ein Dreieck, kann allerdings aufgrund des Versatzes der Ebenen zueinander auch als Vieleck ausgebildet sein.

Dieser Versatz kann beispielsweise bei produktionsbedingten Abweichungen auftreten.

Ausgehend von der zuvor beschriebenen Rückreflexion erfolgt in Fig. 2 zunächst eine Rückreflexion eines vom Sender 7 ausgesandten Ultraschallsignales von dem Teilabschnittes 8.1 auf den Teilabschnitt 8.2. Anschließend passiert das ausgesandte Ultraschallsignal den Teilabschnitt 8.3. Schließlich wird das Ultraschallsignal ein zweites Mal rückreflektiert vom Teilabschnitt 8.4 auf den Teilabschnitt 8.5. Durch eine weitere Reflexion wird das Ultraschallsignal schließlich an den Empfänger 9 übertragen. Insgesamt passiert das Ultraschallsignale somit sechs Teilabschnitte, wodurch ein besonders kompakter Aufbau eines Ultraschall-Durchflussmessgerätes möglich wird. Zudem ist es möglich eine Korrektur über einen sehr weiten Strömungszahlbereich zu ermöglichen.

Durch den geschlossenen Signalpfadsverlauf in Kombination mit der zweifachen Rückreflexion können auch somit rotierende Strömungen mit Verwirbelungen zuverlässig erfasst werden, wie sie beispielsweise im Anschluss an Störungen im Rohr, beispielsweise Rohrbiegungen, 90°-Krümmern usw. auftreten können. Diese Erfassung von rotierenden Strömungen ergänzt sich optimal mit der zuvor beschriebenen Strömungskompensation durch die Verengung des Innendurchmessers der Messrohrwandung innerhalb des Messrohres um Störungen bei der Messung auszugleichen.

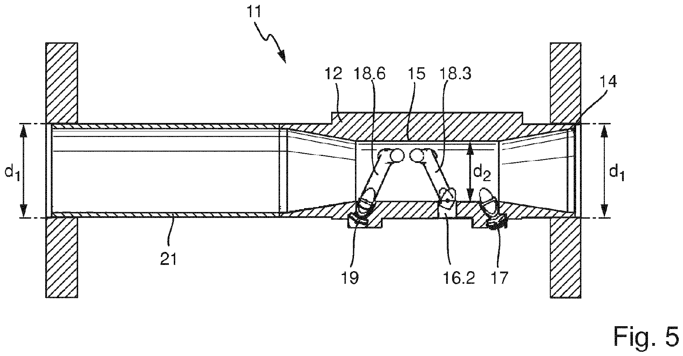

Fig. 5 zeigt ein zweites Ausführungsbeispiel eines erfindungsgemäßen Durchflussmessgerätes 11 mit assymmetrischen Aufbau, mit einem zur Fig. 1-4 im Wesentlichen gleichen Signalverlauf, wobei im vorliegenden Fall ein vorderer Teil bzw. Teilbereich ein Rohrsegment 21 mit konstantem Rohrdurchmesser d₁ ist, für eine erste Gleichrichtung der Strömung und im hinteren Teil bzw. Teilbereichs des Messrohres Ultraschallwandler 17, 19 und Reflektoren 16.1, 16.2 angeordnet sind.
Durch den kompakten Aufbau des Signalpfades 18 können somit bereits bestehende Rohrweiten im vorderen Teilbereich als Einlaufstrecke für eine Strömungsberuhigung genutzt werden. Vom Rohrsegment 21, also dem vorderen Teilbereich des Messrohres 12 ist in Strömungsrichtung ein Übergang 20 angeordnet, welcher unter einem Winkel von 10° in einen ersten Teilbereich mit verengtem Innendurchmesser d₂ übergeht.

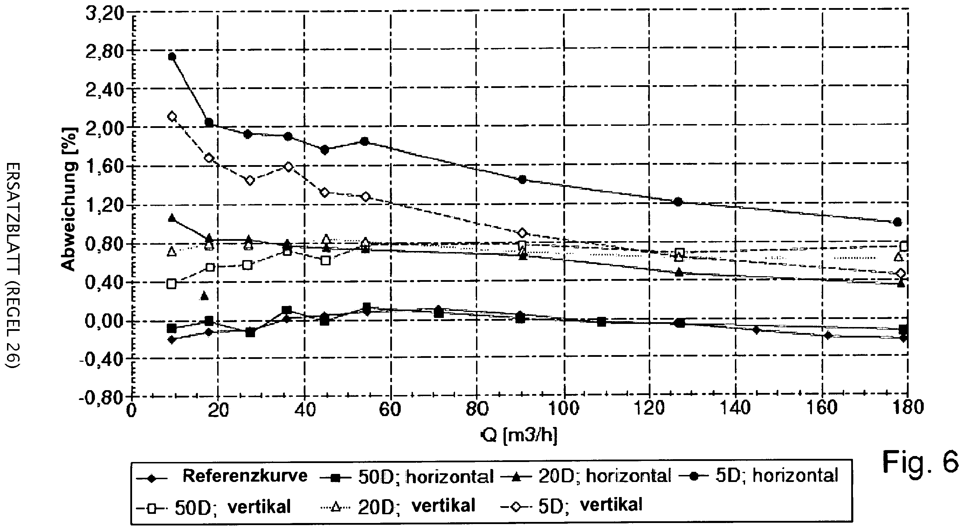

Fig. 6 zeigt ein Diagramm, wobei dev.% für Abweichungen eines gemessenen Volumenstroms in m³/h vom theoretischen Idealfall einer Leitung ohne Störungen ist. Die Referenzkurve ist die tatsächliche Abweichung bei einer Leitung ohne Störung. Die jeweiligen durchgehenden Kurven stellen eine Messung eines bekannten 2-Pfad Ultraschall-Durchflussmessgerätes bei einem Fallrohr mit einem 90° Krümmer dar.

5 D steht dabei für einen Abstand des Ultraschall-Durchflussmessers von der Störung und beträgt 5mal dem Durchmesser des Rohres.

20 D steht für einen Abstand von der Störung von 20mal dem Durchmesser des Rohres und 50 D für 50 mal dem Durchmesser des Rohres.

Die gestrichelten Linien stehen für eine vertikale Krümmung und ein danach vertikal angeordneten Ultraschalldurchflussmesser. Die Abstände 5 D, 20 D und 50 D kennzeichnen abermals den Abstand des 2-Pfad Ultraschalldurchflussmessers von der Krümmung.

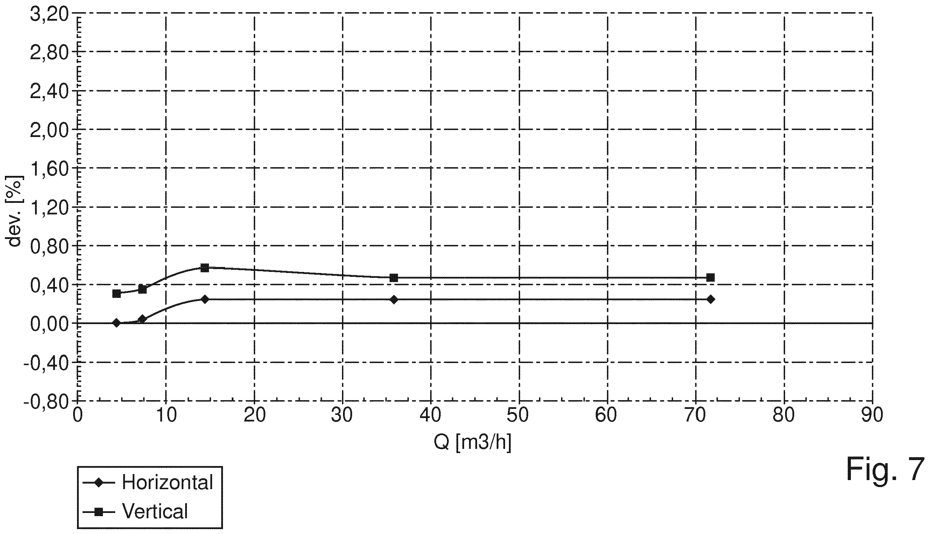

Fig. 7 zeigt Diagramm, welches unter zu Fig. 6 analogen Bedingungen aufgenommen wurde, allerdings mit einem Abstand von 10 D, also einem Abstand des 10-fachen Durchmessers vom 90° Krümmer entfernt.

Bereits die Gegenüberstellung zur 20 D - Messkurve der Fig. 6 zeigt eine deutliche Verbesserung der Abweichungen vom Idealfall. Somit gelingt durch das erfindungsgemäße Ultraschalldurchflussmessgerät eine bessere Kompensation von Strömungseffekten, welche durch vorgelagerte Störungen hervorgerufen werden.

### Bezugszeichenliste

- 1,11: Ultraschall-Durchflussmessgerät
- 2,12: Messrohr
- 3, 13: Flansch
- 4, 14: zweiter Teilbereich
- 5, 15: erster Teilbereich
- 6.1 , 16.1: erste Reflexionsfläche
- 6.2 , 16.2: fünfte Reflexionsfläche
- 6.3 , 16.3: dritte Reflexionsfläche
- 6.4 , 16.4: zweite Reflexionsfläche
- 6.5 , 16.5: vierte Reflexionsfläche
- 7, 17: Sender
- 8, 18: Signalpfad
- 8.1, 18.1: erster gerader Teilabschnitt
- 8.2, 18.2: zweiter gerader Teilabschnitt
- 8.3, 18.3: fünfter gerader Teilabschnitt
- 8.4, 18.4: dritter gerader Teilabschnitt
- 8.5, 18.5: vierter gerader Teilabschnitt
- 8.6, 18.6: sechster gerader Teilabschnitt
- 9, 19: Empfänger
- 10, 20: Übergang
- 21:

## Patentansprüche

1. Ultraschall-Durchflussmessgerät, welches ein Messrohr (2, 12) mit einer geraden Messrohrachse (M), einen Sender (7) zum Senden eines akustischen Signals auf einen ersten Signalpfad, einen Empfänger (9, 19) zum Empfangen des akustischen Signals auf dem ersten Signalpfad (8, 18) und mehrere Reflexionsflächen (6.1-6.5, 16.1-16.5) umfasst, an welchen das akustische Signal auf dem ersten Signalpfad (8) jeweils zumindest einmal reflektiert wird, wobei sich dieser erste Signalpfad (8) aus geraden Teilabschnitten (8.1-8.6, 18.1-18.6) zusammensetzt,
**dadurch gekennzeichnet, dass**
a) jeweils die minimalen Abstände von mindestens drei Teilabschnitten (8.1, 8.3, 8.4, 18.1, 18.3, 18.4) einen Abstand von 0,4-0,6 r zur Messrohrachse (M) aufweisen, wobei r der Innenradius des Messrohres (2, 12) ist;
b) wobei ein erster Teilabschnitt (8.1, 18.1), welcher eine erste achsparallele Ebene definiert, einen unmittelbar darauffolgenden zweiten Teilabschnitt (8.2, 18.2) aufweist, welcher eine zweite achsparallele Ebene definiert, beide Ebenen durch eine erste Reflexionsfläche (6.1, 16.1) verlaufen und die Normalvektoren einen Winkel von weniger als 10° einschließen,
c) wobei ein dritter Teilabschnitt (8.4, 18.4), welcher eine dritte achsparallele Ebene definiert, einen unmittelbar darauffolgenden vierten Teilabschnitt (8.5, 18.5) aufweist, welcher eine vierte achsparallele Ebene definiert,
wobei beide Ebenen durch eine zweite Reflexionsfläche (6.4, 16.4) verlaufen und die Normalvektoren einen Winkel von weniger als 10° einschließen; und
d) wobei der Verlauf des Signalpfades (8, 18) in axialer Draufsicht ein Vieleck beschreibt, dessen Seitenschnittpunkte innerhalb, auf oder außerhalb des Messrohres (2, 12) liegen.

2. Ultraschall-Durchflussmessgerät, nach Anspruch 1 ,
**dadurch gekennzeichnet, dass**
die dritte und eine vierte Reflexionsfläche (6.3, 6.5, 16.3, 16.5) auf oder im Messrohr (2, 12) parallel zur Messrohrachse (M) hintereinander angeordnet sind
und
eine fünfte Reflexionsfläche (6.2, 16.2) und
entweder
i der Sender (7, 17) oder
ii der Empfänger (9, 19) oder
iii eine sechste Reflexionsfläche
auf oder im Messrohr (2, 12) parallel zur Messrohrachse (M) hintereinander angeordnet sind, wobei sich der Signalpfad (8, 18) aus sechs oder weniger geraden Teilpfaden zusammensetzt.

3. Ultraschall-Durchflussmessgerät nach Anspruch 1 oder 2,
**dadurch gekennzeichnet, dass**
der Sender (7, 17), der Empfänger (9, 19) und die Reflexionsflächen (6.1-6.5, 16.1-16.5) derart zueinander im oder am Messrohr (2) angeordnet oder ausgerichtet sind, dass der Verlauf des Signalpfad (8) in axialer Draufsicht ein Dreieck beschreibt, dessen Schenkelschnittpunkte innerhalb, auf oder außerhalb der Messrohrwandung liegen und dass der erste und der zweite Teilabschnitt (8.1, 8.2, 18.1, 18.2) des Signalpfades (8) entlang eines ersten Schenkels des Dreiecks verlaufen, wobei der erste und der zweite Teilabschnitt des Signalpfades aufeinanderfolgende Teilabschnitte sind,
und
dass der dritte und der vierte Teilabschnitt (8.4, 8.5, 18.4, 18.5) des Signalpfades (8) entlang eines zweiten Schenkels des Dreiecks verlaufen, wobei der dritte und der vierte Teilabschnitt des Signalpfades aufeinanderfolgende Teilabschnitte sind.

4. Ultraschall-Durchflussmessgerät, nach einem der vorhergehenden Ansprüche,
**dadurch gekennzeichnet, dass**
durch Reflexion des ersten Teilabschnittes (8.1, 18.1) an einer ersten der Reflexionsflächen (6.1) der zweite Teilabschnitt (8.2, 18.2) gebildet wird und
dass durch Reflexion des dritten Teilabschnittes (8.4, 18.4) an einer zweiten der Reflexionsflächen (6.4, 16.4) der vierte Teilabschnitt (8.5, 18.5) gebildet wird.

5. Ultraschall-Durchflussmessgerät nach einem der vorhergehenden Ansprüche, **dadurch gekennzeichnet, dass**
beide Ebenen gemäß Merkmal b) und/oder Merkmal c) durch die erste und/oder die zweite Reflexionsfläche (6.1, 6.4, 16.1, 16.4) verlaufen und die Normalvektoren einen Winkel von weniger als 5°, vorzugsweise weniger als 2°, besonders bevorzugt weniger als 0,2°, einschließen.

6. Ultraschall-Durchflussmessgerät nach einem der vorhergehenden Ansprüche,
**dadurch gekennzeichnet, dass**
die abschnittshalbierenden Punkte von mindestens drei Teilabschnitten einen Abstand von 0,45-0,55 r, vorzugsweise 0,48-0,52 r, zur Messrohrachse (M) aufweisen, wobei r der Innenradius des Messrohres (2, 12) ist.

7. Ultraschall-Durchflussmessgerät nach einem der vorhergehenden Ansprüche,
**dadurch gekennzeichnet, dass**
das Ultraschall-Durchflussmessgerät einen Rotationsausgleich von rotierenden Strömungen berücksichtigt.

8. Ultraschall-Durchflussmessgerät nach einem der vorhergehenden Ansprüche,
**dadurch gekennzeichnet, dass**
das Vieleck durch insgesamt sechs Teilabschnitte (8.1-8.6, 18.1-18.6) des Signalpfades (8, 18) aufgebaut ist.

9. Ultraschall-Durchflussmessgerät, nach einem der vorhergehenden Ansprüche 1-8,
**dadurch gekennzeichnet, dass**
das Messrohr (2, 12) einen ersten Teilbereich (5) mit vermindertem Innendurchmesser (d₂) zur Strömungskompensation aufweist.

10. Ultraschall-Durchflussmessgerät, nach Anspruch 9,
**dadurch gekennzeichnet, dass**
der Signalpfad (8, 18) innerhalb des ersten Teilbereiches (5, 15) des Messrohres verläuft.

11. Ultraschall-Durchflussmessgerät nach einem der Ansprüche 9-10,
**dadurch gekennzeichnet, dass**
der Anstellwinkel (α) zwischen einem zweiten Teilbereich (4, 14, 21) des Messrohres mit größerem Innendurchmesser und dem ersten Teilbereich (5, 15) mit vermindertem Innendurchmesser weniger als 15°, vorzugsweise weniger als 10°, insbesondere 6-8° beträgt.

12. Ultraschall-Durchflussmessgerät nach einem der vorhergehenden Ansprüchen, **dadurch gekennzeichnet, dass**
das Messrohr (12) einen vorderen Teilbereich (21) aufweist zur Gleichrichtung der Strömung.

13. Ultraschall-Durchflussmessgerät nach Anspruch 12
**dadurch gekennzeichnet, dass**
der Signalpfad (18) in Strömungsrichtung hinter dem vorderen Teilbereich (21) verläuft.

14. Ultraschall-Durchflussmesser nach Anspruch 12 oder 13,
**dadurch gekennzeichnet, dass**
der erste Teilbereich (5, 15) mit vermindertem Innendurchmesser (d₂) in Strömungsrichtung hinter dem vorderen Teilbereich (21) angeordnet ist.

15. Verwendung eines Ultraschall-Durchflussmessgerätes nach einem der vorhergehenden Ansprüche zur Bestimmung der Fließgeschwindigkeit und/oder des Volumendurchflusses eines durch das Messrohr (2, 12) fließenden Mediums nach dessen Durchlauf durch einen gekrümmten Bereich einer Rohrleitung.

16. Verwendung eines Ultraschall-Durchflussmessgerätes nach Anspruch 15,
**dadurch gekennzeichnet, dass**
das Ultraschall-Durchflussmessgerät (1, 11) in einem Abstand von 20d oder weniger hinter dem gekrümmten Bereich der Rohrleitung angeordnet ist, wobei d dem Durchmesser der Rohrleitung entspricht.

17. Verwendung nach Anspruch 16,
**dadurch gekennzeichnet, dass**
das Ultraschall-Durchflussmessgerät (1, 11) in einem Abstand von 10d oder weniger, vorzugsweise 5d oder weniger, besonders bevorzugt direkt am gekrümmten Bereich einer Rohrleitung angeordnet ist.

## Claims

1. Ultrasonic flowmeter, which comprises a measuring tube (2, 12) with a straight measuring tube axis (M), a transmitter (7) designed to transmit an acoustic signal on a first signal path, a receiver (9, 19) designed to receive the acoustic signal on the first signal path (8, 18) and multiple reflection surfaces (6.1-6.5, 16.1-16.5) on which the acoustic signal on the first signal path (8) is reflected at least once, wherein this first signal path (8) is made up of straight subsections (8.1-8.6, 18.1-18.6);
**characterized in that**
a) the minimum distances of at least three subsections (8.1, 8.3, 8.4, 18.1, 18.3, 18.4) is a distance of 0.4-0.6 r in relation to the measuring tube axis (M), wherein r is the inner radius of the measuring tube (2, 12) ;
b) wherein a first subsection (8.1, 18.1), which defines a first plane parallel to the axis, has a second subsection (8.2, 18.2) immediately following this, wherein said second subsection defines a second plane parallel to the axis, wherein the two planes pass through a first reflection surface (6.1, 16.1) and the normal vectors delimit an angle of less than 10°,
c) wherein a third subsection (8.4, 18.4), which defines a third plane parallel to the axis, has a fourth subsection (8.5, 18.5) immediately following this, wherein said fourth subsection defines a fourth plane parallel to the axis, wherein the two planes pass through a second reflection surface (6.4, 16.4) and the normal vectors delimit an angle of less than 10°; and
d) wherein the pattern of the signal path (8, 18) in the axial top view describes a polygon which side points of intersection are situated inside, on or outside the measuring tube (2, 12).

2. Ultrasonic flowmeter as claimed in Claim 1,
**characterized in that**
the third and a fourth reflection surface (6.3, 6.5, 16.3, 16.5) are arranged on or in the measuring tube (2, 12) behind one another and parallel to the measuring tube axis (M)
and
a fifth reflection surface (6.2, 16.2) and
either
i the transmitter (7, 17), or
ii the receiver (9, 19), or
iii a sixth reflection surface
are arranged on or in the measuring tube (2, 12) behind one another and parallel to the measuring tube axis (M), wherein the signal path (8, 18) comprises six (or fewer) straight partial paths.

3. Ultrasonic flowmeter as claimed in Claim 1 or 2,
**characterized in that**
the transmitter (7, 17), the receiver (9, 19) and the reflection surfaces (6.1-6.5, 16.1-16.5) are arranged and aligned in relation to one another in or on the measuring tube (2) in such a way that the pattern of the signal path (8) in the axial top view describes a triangle whose side points of intersection are located inside, on or outside the measuring tube wall, and
**in that** the first and second subsection (8.1, 8.2, 18.1, 18.2) of the signal path (8) pass along a first side of the triangle, wherein the first and second subsection of the signal path are consecutive subsections,
and
**in that** the third and fourth subsection (8.4, 8.5, 18.4, 18.5) of the signal path (8) pass along a second side of the triangle, wherein the third and fourth subsection of the signal path are consecutive subsections.

4. Ultrasonic flowmeter as claimed in one of the previous claims,
**characterized in that**
the second subsection (8.2, 18.2) is formed by the reflection of the first subsection (8.1, 18.1) at a first of the reflection surfaces (6.1), and **in that** the fourth subsection (8.5, 18.5) is formed by the reflection of the third subsection (8.4, 18.4) at a second of the reflection surfaces (6.4, 16.4).

5. Ultrasonic flowmeter as claimed in one of the previous claims,
**characterized in that**
the two planes according to characteristic b) and/or characteristic c) pass through the first and/or the second reflection surface (6.1, 6.4, 16.1, 16.4) and the normal vectors delimit an angle of less than 5°, preferably less than 2° and particularly preferably less than 0.2°.

6. Ultrasonic flowmeter as claimed in one of the previous claims,
**characterized in that**
the points bisecting the section of at least three subsections have a distance of 0.45-0.55 r, preferably of 0.48-0.52 r, in relation to the measuring tube axis (M), wherein r is the inner radius of the measuring tube (2, 12).

7. Ultrasonic flowmeter as claimed in one of the previous claims,
**characterized in that**
the ultrasonic flowmeter takes account of a rotation compensation of rotating flows.

8. Ultrasonic flowmeter as claimed in one of the previous claims,
**characterized in that**
the polygon consists of a total of six subsections (8.1-8.6, 18.1-18.6) of the signal path (8, 18).

9. Ultrasonic flowmeter as claimed in one of the previous claims 1-8,
**characterized in that**
the measuring tube (2, 12) has a first subarea (5) with a reduced inner diameter (d₂) for flow compensation.

10. Ultrasonic flowmeter as claimed in Claim 9,
**characterized in that**
the signal path (8, 18) runs within the first subarea (5, 15) of the measuring tube.

11. Ultrasonic flowmeter as claimed in one of the Claims 9-10,
**characterized in that**
the angle of attack (σ) between a second subarea (4, 14, 21) of the measuring tube with a larger inner diameter and the first subarea (5, 15) with a reduced inner diameter is less than 15°, preferably less than 10°, particularly 6-8°.

12. Ultrasonic flowmeter as claimed in one of the previous claims,
**characterized in that**
the measuring tube (12) has a front subarea (21) to rectify the flow.

13. Ultrasonic flowmeter as claimed in Claim 12,
**characterized in that**
the signal path (18) extends in the flow direction behind the front subarea (21).

14. Ultrasonic flowmeter as claimed in Claim 12 or 13,
**characterized in that**
the first subarea (5, 15) with the reduced inner diameter (d₂) is arranged in the flow direction behind the front subarea (21).

15. Use of an ultrasonic flowmeter as claimed in one of the previous claims to determine the flow velocity and/or volume flow of a medium flowing through the measuring tube (2, 12) after it passes through a curved section of a pipe.

16. Use of an ultrasonic flowmeter as claimed in Claim 15,
**characterized in that**
the ultrasonic flowmeter (1, 11) is arranged at a distance of 20d or less behind the curved section of the pipe, wherein d corresponds to the diameter of the pipe.

17. Use as claimed in Claim 16,
**characterized in that**
the ultrasonic flowmeter (1, 11) is arranged at a distance of 10d or less, preferably 5d or less, particularly preferably directly at the curved area of a pipe.

## Revendications

1. Débitmètre à ultrasons, lequel comprend un tube de mesure (2, 12) avec un axe de tube de mesure (M) droit, un émetteur (7) destiné à l'émission d'un signal acoustique sur un premier trajet de signal, un récepteur (9, 19) destiné à la réception du signal acoustique sur le premier trajet de signal (8, 18) et plusieurs surfaces de réflexion (6.1-6.5, 16.1-16.5), sur lesquelles le signal acoustique est réfléchi respectivement au moins une fois, ce premier trajet de signal (8) se composant de sections partielles (8.1-8.6, 18.1-18.6) droites ;
**caractérisé**
**en ce que**
a) les distances minimales respectives d'au moins trois sections partielles (8.1, 8.3, 8.4, 18.1, 18.3, 18.4) présentent une distance de 0,4-0,6 r par rapport à l'axe de tube de mesure (M), r étant le rayon intérieur du tube de mesure (2, 12) ;
b) une première section partielle (8.1, 18.1), laquelle définit un premier plan parallèle à l'axe, présente une deuxième section partielle (8.2, 18.2) immédiatement consécutive, laquelle définit un deuxième plan parallèle à l'axe, les deux plans passant par une première surface de réflexion (6.1, 16.1) et les vecteurs normaux délimitant un angle de moins de 10°,
c) une troisième section partielle (8.4, 18.4), laquelle définit un troisième plan parallèle à l'axe, présente une quatrième section partielle (8.5, 18.5) immédiatement consécutive, laquelle définit un quatrième plan parallèle à l'axe, les deux plans passant par une deuxième surface de réflexion (6.4, 16.4) et les vecteurs normaux délimitant un angle de moins de 10° : et
d) le tracé du trajet de signal (8, 18) décrivant dans une vue de dessus axiale un polygone, dont les points d'intersection des côtés se situent à l'intérieur, sur ou à l'extérieur du tube de mesure (2, 12).

2. Débitmètre à ultrasons selon la revendication 1,
**caractérisé**
**en ce que** la troisième et une quatrième surface de réflexion (6.3, 6.5, 16.3, 16.5) sont disposées sur ou dans le tube de mesure (2, 12), l'une derrière l'autre parallèlement à l'axe de tube de mesure (M)
et
**en ce qu'**une cinquième surface de réflexion (6.2, 16.2) et
soit
i l'émetteur (7, 17), soit
ii le récepteur (9, 19), soit
iii une sixième surface de réflexion
sont disposés sur ou dans le tube de mesure (2, 12), l'un derrière l'autre parallèlement à l'axe de tube de mesure (M), le trajet de signal (8, 18) se composant de six (ou moins) trajets partiels droits.

3. Débitmètre à ultrasons selon la revendication 1 ou 2,
**caractérisé**
**en ce que** l'émetteur (7, 17), le récepteur (9, 19) et les surfaces de réflexion (6.1-6.5, 16.1-16.5) sont disposés et alignés les uns par rapport aux autres dans ou sur le tube de mesure (2) de telle sorte que le tracé du trajet de signal (8) décrit, en vue de dessus axiale, un triangle dont les points d'intersection des côtés se situent à l'intérieur, sur ou à l'extérieur de la paroi de tube de mesure, et
**en ce que** la première et la deuxième section partielle (8.1, 8.2, 18.1, 18.2) du trajet de signal (8) passent le long d'un premier côté du triangle, la première et la deuxième section partielle du trajet de signal étant des sections partielles consécutives,
et
**en ce que** la troisième et la quatrième section partielle (8.4, 8.5, 18.4, 18.5) du trajet de signal (8) passent le long d'un deuxième côté du triangle, la troisième et la quatrième section partielle du trajet de signal étant des sections partielles consécutives.

4. Débitmètre à ultrasons selon l'une des revendications précédentes,
**caractérisé**
**en ce que** la deuxième section partielle (8.2, 18.2) est formée par réflexion de la première section partielle (8.1, 18.1) sur une première parmi les surfaces de réflexion (6.1) et **en ce que** la quatrième section partielle (8.5, 18.5) est formée par réflexion de la troisième section partielle (8.4, 18.4) sur une deuxième parmi les surfaces de réflexion (6.4, 16.4).

5. Débitmètre à ultrasons selon l'une des revendications précédentes,
**caractérisé**
**en ce que** les deux plans selon la caractéristique b) et/ou la caractéristique (c) passent à travers la première et/ou la deuxième surface de réflexion (5.1, 6.4, 16.1, 16.4) et les vecteurs normaux délimitent un angle de moins de 5°, de préférence de moins de 2° et particulièrement de préférence de moins de 0,2°.

6. Débitmètre à ultrasons selon l'une des revendications précédentes,
**caractérisé**
**en ce que** les points bissectant la section d'au moins trois sections partielles présentent une distance de 0,45-0,55 r, de préférence de 0,48-0,52 r, par rapport à l'axe de tube de mesure (M), r étant le rayon intérieur du tube de mesure (2, 12).

7. Débitmètre à ultrasons selon l'une des revendications précédentes,
**caractérisé**
**en ce que** le débitmètre à ultrasons tient compte d'une compensation en rotation d'écoulements rotatifs.

8. Débitmètre à ultrasons selon l'une des revendications précédentes,
**caractérisé**
**en ce que** le polygone est composé d'un total de six sections partielles (8.1-8.6, 18.1-18.6) du trajet de signal (8, 18).

9. Débitmètre à ultrasons selon l'une des revendications précédentes 1 à 8,
**caractérisé**
**en ce que** le tube de mesure (2, 12) présente une première zone partielle (5) avec un diamètre intérieur (d₂) réduit en vue de la compensation de l'écoulement.

10. Débitmètre à ultrasons selon la revendication 9,
**caractérisé**
**en ce que** le trajet de signal (8, 18) passe à l'intérieur de la première zone partielle (5, 15) du tube de mesure.

11. Débitmètre à ultrasons selon l'une des revendications précédentes 9 à 10, **caractérisé**
**en ce que** l'angle d'incidence (σ) entre une deuxième zone partielle (4, 14, 21) du tube de mesure avec un diamètre intérieur supérieur et la première zone partielle (5, 15) avec un diamètre intérieur réduit est inférieur à 15°, de préférence inférieur à 10°, notamment inférieur à 6-8°.

12. Débitmètre à ultrasons selon l'une des revendications précédentes,
**caractérisé**
**en ce que** le tube de mesure (12) présente une zone partielle avant (21) pour le redressement de l'écoulement.

13. Débitmètre à ultrasons selon la revendication 12,
**caractérisé**
**en ce que** le chemin de signal (18) passe, dans le sens de l'écoulement, derrière la zone partielle avant (21).

14. Débitmètre à ultrasons selon la revendication 12 ou 13,
**caractérisé**
**en ce que** la première zone partielle (5, 15) de diamètre intérieur (d₂) réduit est disposée, dans le sens de l'écoulement, derrière la zone partielle avant (21).

15. Utilisation d'un débitmètre à ultrasons selon l'une des revendications précédentes destiné à la détermination de la vitesse d'écoulement et/ou du débit volumique d'un produit s'écoulant à travers le tube de mesure (2, 12) après son passage à travers une zone incurvée d'une conduite.

16. Utilisation d'un débitmètre à ultrasons selon la revendication 15,
**caractérisée**
**en ce que** le débitmètre à ultrasons (1, 11) est disposé à une distance de 20d ou moins derrière la zone incurvée de la conduite, d correspondant au diamètre de la conduite.

17. Utilisation selon la revendication 16,
**caractérisée**
**en ce que** le débitmètre à ultrasons (1, 11) est disposé à une distance de 10d ou moins, de préférence 5d ou moins, particulièrement de préférence directement dans la zone incurvée d'une conduite.
